# EUROPEAN PATENT APPLICATION

(11) **EP 3 254 817 A1**
(43) Date of publication of application: **13.12.2017**
(21) Application number: 17174758.7
(22) Date of filing: 07.06.2017
(51) Int. Cl.: B28D 1/00, C04B 41/48

(54) **PROCESS FOR THE RESTORATION OR THE CONSOLIDATION OF SLABS OF STONE MATERIAL**

(30) Priority: 10.06.2016 IT TV20169548
(71) Applicant: Toncelli, Dario, 36061 Bassano del Grappa (VI) (IT)
(72) Inventor: Toncelli, Dario, 36061 Bassano del Grappa (VI) (IT)
(74) Representative: Dragotti, Gianfranco

(57) **Abstract**

A method for reconditioning or consolidating slabs (12) of stone material, comprising the steps of:
a) identifying cracks (14, 16, 18) or crack portions having a width, along the surface of the slab, not greater than about 1 mm, and/or cracks or crack portions containing occlusions;
b) making an incision in the cracks (14, 16, 18) or crack portions identified in step (a), so as to form incisions (20, 22, 24) which are not through-incisions;
c) filling the incisions (20, 22, 24) made, with a filling material comprising resin or adhesive material; and
d) allowing the resin or adhesive material to harden.

## Description

The present invention relates to a method for reconditioning or consolidating slabs of natural stone material.

In particular, the present invention relates to a method for reconditioning or consolidating slabs of stone material such as marble or granite.

In the sector relating to the processing of natural stone materials, there is an increasingly greater necessity to use also so-called "waste" materials, such that it is possible to achieve a reduction in the extraction activity and consequently a reduction in the environmental impact. This results in the need to have to subject materials, which are not always intact or resistant, to certain industrial processes such that they may be rendered suitable for use in the furnishing sector and building industry.

Moreover, there is need on the part of a niche market for special - often high-value and even semi-precious - materials, considered to be unobtainable by means of an automated process line.

According to the present state of the art methods for reconditioning and consolidating these slabs are known, said methods consisting in the resin-coating of one or more faces of the cut slabs, with or without the aid of reinforcing elements, said resin-coating being able to be performed in air or in the presence of a more or less pronounced vacuum.

A method of this type is disclosed for example in Italian patent IT 1350875.

The application of the known methods to a certain type of slab made of stone material has a number of drawbacks.

A typical case relates to slabs which have cracks or crack portions which are very narrow, for example not bigger than about 1 mm, also called "hair-line fractures".

In fact the resin-coating process consists in applying a layer of resin or other types of adhesive materials with the intention of joining together the walls of the cracks by means of a layer of resin which is fixed to the surfaces of the two portions of material to be united or joined together. Owing to the chemical/physical structure of the resin and in particular its viscosity, the resin is able to penetrate only into those cracks which have a size and form such as to allow the resin to penetrate and fill the cavities. Instead, in the case of the aforementioned cracks or crack portions, i.e. those with a width not greater than about 1 mm, the resin penetrates an insufficient amount or even does not penetrate at all.

Generally, these slabs are discarded or the slab is broken along the cracks and the slab is then reconstructed.

Another specific case is that of the slabs which have cracks filled with occlusions or calcareous or clay-like depositions. These occlusions or depositions are not large in size, but prevent the resin from penetrating.

The object of the invention is therefore to overcome substantially or at least partially the drawbacks of the prior art.

A first task of the present invention is to provide an industrial process which is able to recondition or consolidate slabs along the cracks where the resin is unable to penetrate or has difficulty doing so, so as to increase the efficiency of the resin-coating process and, consequently, of the slab reconditioning operation.

A further task of the present invention is to provide a method which is able to use slabs where the cracks have portions lined or coated with clay-like or flimsy materials, thus making it possible to treat and recondition slabs which otherwise could not be recovered.

The object and tasks are achieved with a method according to Claim 1.

The method essentially consists in widening the cracks, where necessary removing the occlusions, along the surface of the slabs to be treated, preferably to a size of at least about 3 mm, and then subsequently filling them again with resin or adhesive.

More specifically, the method envisages a mechanical action, performed preferably using cutting tools, or as a possible alternative using pressurized-water jets, in order to remove a sufficient amount of material from the cracks so as to eliminate any loose parts formed by depositions or occlusions, followed by pouring the adhesive filler material inside the space created.

The advantages and characteristic features of the present invention will emerge more clearly from the detailed description below of a number of examples of embodiment provided by way of a non-limiting example, with reference to the attached drawings in which:
Fig. 1 shows in schematic form a top plan view of a slab before being subjected to the method of the present invention;
Fig. 2 shows a schematic cross-section of the slab according to Fig. 1 along the cross-sectional plane II-II;
Fig. 3 shows in schematic form a top plan view of a slab during a first stage of the method according to the present invention;
Fig. 4 shows a schematic cross-section of the slab according to Fig. 3 along the cross-sectional plane IV-IV;
Figs. 5-7 show a block diagram of a method according to the present invention; and
Fig. 8 shows a schematic front view of a plant according to the present invention.

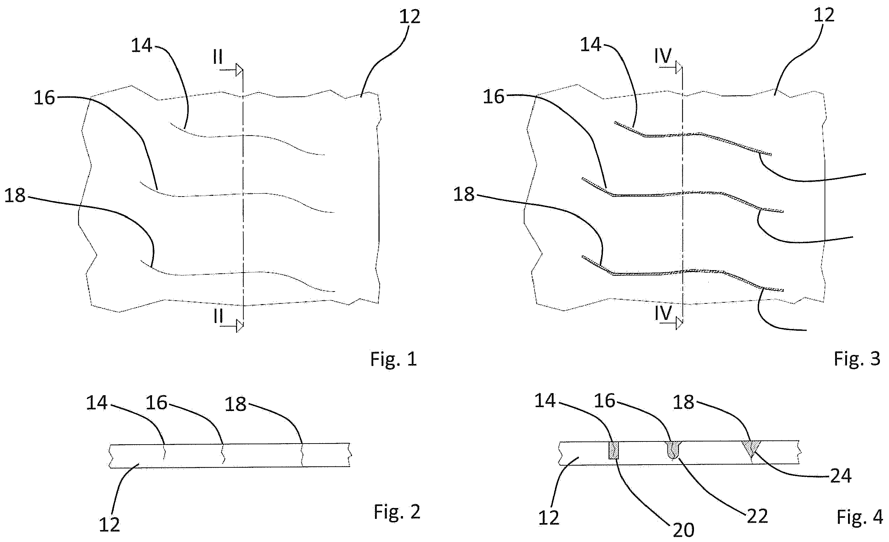

Figure 1 shows a slab 12, in which three cracks 14, 16, 18 are schematically indicated.

In the present description, "crack" is understood as meaning a discontinuity in the surface of the material which may also pass through the thickness of the slab 12.

Figure 2 shows a cross-section of the slab according to Figure 1 along the cross-sectional plane II-II.

As can be clearly seen from Figure 2, the cracks 14, 16 and 18 may have a differing depths, and in particular:
- the depth of the crack 14 reaches about the middle of the thickness of the slab 12;
- the depth of the crack 16 extends beyond the middle of the thickness of the slab 12; and
- the depth of the crack 18 forms a through-crack and therefore passes through the entire thickness of the slab.

The method for reconditioning or consolidating slabs 12 of stone material according to the present invention comprises essentially the steps of:
a) identifying cracks (14, 16, 18) or crack portions having a width, along the surface of the slab, not greater than about 1 mm, and/or cracks or crack portions containing occlusions;
b) making an incision in the cracks (14, 16, 18) or crack portions identified in step (a), so as to form incisions (20, 22, 24) which are not through-incisions;
c) filling the incisions (20, 22, 24) made, with a filling material comprising resin or adhesive material; and
d) allowing the resin or adhesive material to harden.

Advantageously, the incisions have a width along the surface of the slab equal to at least about 3 mm.

The surface in which the incision is made may be the rear surface of the slab, i.e. the surface intended not to be visible during use of the slab.

The first step is the step where the cracks 14, 16, 18 are identified. The identification step may be performed in different ways.

A first way involves a step where a scan or photograph of the surface of the slab is taken using optical detection systems having a suitable resolution such that the image may be reproduced clearly on a video or a monitor.

Before photographing or scanning the slab surface the operator may indicate or mark, for example with a chalk, the cracks which would be difficult to identify directly from the photograph or scanned recording. In fact, certain critical cracks may be detected only by the naked eye in special lighting conditions, observing the slab against the light.

Then an operator, assisted by a processing program which may be more or less interactive, may identify and transfer to a management system, by means of a pointer (for example a mouse or an electronic pen), the geometric path of the cracks which are to be treated. Alternatively, a completely automatic detection system may be used, using, for example, a scanner able to recognize, in addition to the shape and size of the slab, also the geometric path of the cracks previously identified by means of a suitable marker which can be sensed by the scanner.

It is also possible to provide a completely manual system in which an operator identifies the cracks independently and manually carries out also the following incision step. This alternative system could be convenient in the case of low-cost labour.

The second step of the method envisages incision of the cracks 14, 16, 18, the geometric path of which has been previously identified, to a depth which passes through part of the thickness of the slab.

In accordance with possible embodiments of the present invention, incision of only the crack portion having a width, along the surface of the slab, not greater than about 1 mm may be performed, or incision of the entire crack may be performed.

In accordance with a possible embodiment of the present invention, the incisions may extend to about 60-80% of the thickness of the slab.

Advantageously, the incision may be made on the rear surface of the slab, so as not to damage the appearance of the side which during use is visible.

The second step is schematically shown in Figures 3 and 4 which show a slab in which incision of the cracks 14, 16, 18 has been performed by means of a rotating diamond tool with a shaped profile, forming respectively incisions 20, 22, 24 which are not through-incisions.

As can be seen in the cross-section of Figure 4, the cross-section of the incision may assume different forms depending on the shape of the tool which is used, for example:
- for the crack 14 a rectangular form has been chosen;
- for the crack 16 a form tapered towards the surface of the slab has been chosen; and
- for the crack 18 a triangular form has been chosen.

Advantageously, the second step may be automated, i.e. a tool suitable for machining may be moved automatically so as to perform an incision inside the cracks identified.

If the crack is filled with occlusions, these may also be removed by means of a high-pressure water jet, leaving the original form properly cleaned.

The machining tool, whether it be mechanical or a water jet, may be moved for example using an anthropomorphic arm, a Cartesian robot or, more generally, any machine with three, four or five axes.

An example of this type of machine is a machine comprising two lateral support structures above which a beam resting on the structures with its ends moves. A carriage able to slide along the beam is designed to support slidably a sleeve in the vertical direction. A machining head is connected to the bottom end of the sleeve.

The machining head may comprise, for example, a diamond disc, a water cutting nozzle, a diamond-chain tool, a shaped milling cutter, or an end milling cutter.

The machining head may also comprise a combination of different tools, for example a diamond-disc tool and a water cutting nozzle.

This method may be performed in dry conditions, with simultaneous suction of the milling residue, and in the presence of a coolant (for example water).

The machine for performing the incision may further comprise a programmable control unit suitable for moving the tool. Advantageously, the programmable control unit may be suitable for processing a path of the tool following information received about the geometry of the crack in which the incision is to be made.

The incision, which has a depth smaller than the thickness of the slab, may have a width, measured along the surface of the slab, equal to at least 3 mm and may be for example comprised between 4 and 8 mm.

However, the width, form and depth of the incision vary depending not only on the geometry of the original crack, but also on the material and/or the glues to be used.

It has been found to be particularly advantageous, in order to eliminate a sufficient thickness of loose and non-gluable material, to make an incision on the rear side of the slab to a depth of about 60-80% of the thickness of the said material.

In accordance with a possible alternative embodiment of the present invention, the machine for performing the incision could follow the path of the cracks identified by means of a suitable marker using tracking means, known per se to the person skilled in the art, these being able to track the path detected by an optical reader installed opposite the tool.

As mentioned further above, the operation could also be performed manually by an operator, namely after manually marking the cracks to be treated, the operator manually cuts or etches out the cracks.

In this case also, the manual alternative could be advantageous in the case of low-cost labour or in the case where this treatment is performed occasionally and therefore the adaptation or purchase of machine tools for this operation is not economically advantageous.

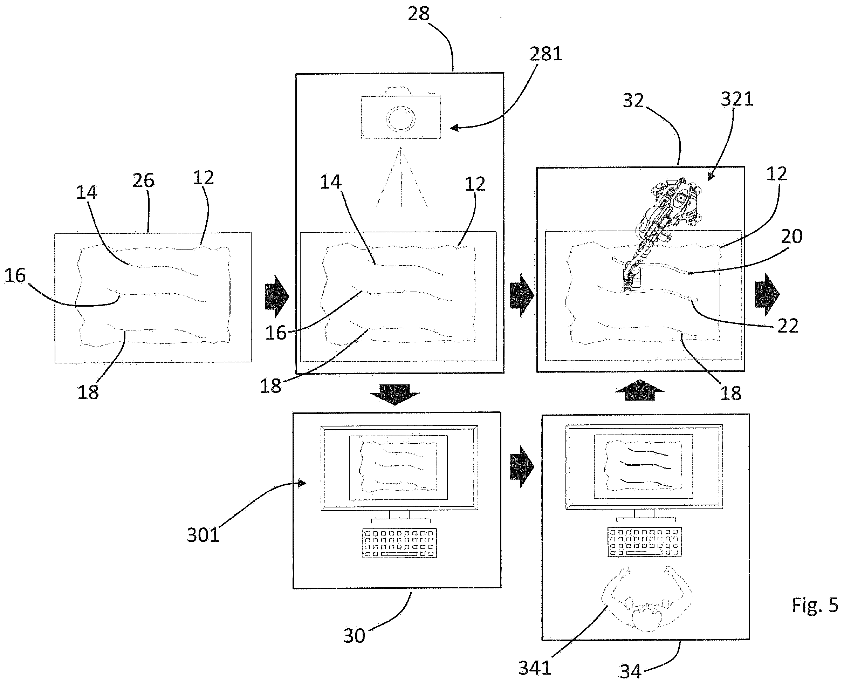

Figure 5 shows a block diagram in which a possible sequence of these first stages of the method of the present invention is schematically shown.

Box 26 shows the rear non-visible side of a slab 12 with cracks 14, 16 and 18 already highlighted by an operator using a suitable marker. The slab is then subjected to a step for identifying the cracks 14, 16 and 18, for example by means of a photographic acquisition system 281, which sends the image to a processor 301 (box 30) or directly to a machine tool 321 (box 32) which performs autonomously the incisions required.

Alternatively, the image acquired by the processor is analyzed by an operator 341 which, via a pointer, decides which machining operation is to be performed. The information thus generated is then sent to the machine tool 321 which performs the required machining operation and therefore the incisions 20, 22, 24 along the cracks 14, 16, 18 (in the box 32 only the incisions 20 and 22 have been made, while the incision has not yet been made on the crack 18).

The method according to the present invention may comprise a step of cleaning the slab in which the incisions 20, 22, 24 have been made in order to eliminate the machining residue left inside the incisions.

Moreover, the method may comprise a step where the slab is dried if the incision is performed using a liquid supply resulting both from jet cutting and from any lubricant used. The purpose of the step involving drying the slab of stone material is to facilitate the adhesive action of given types of resin which may be used for filling the cracks.

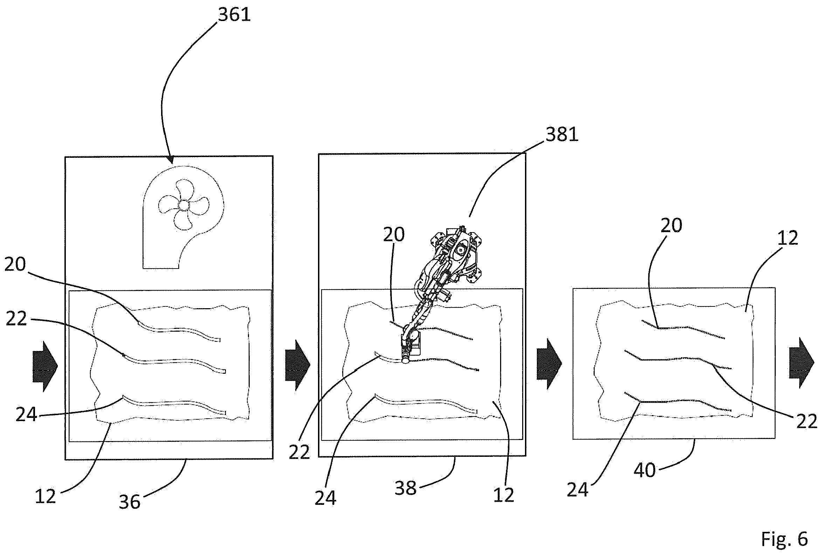

The drying step is schematically shown in the box 36 in Fig. 6 and envisages the use of a drying device 361.

A further step could also be provided where the slab is preheated in order to improve the grip of certain types of resin used.

This is then followed by the filling of the incisions made. Filling may be performed:
- using the bonding resin alone, for example epoxy, polyester or silicone resin;
- using bonding resin and stone material granulate.

The stone material granulate may be an inert granulate (sand) of stone material with a given grain size and colour.

It is preferable to add the inert filling material because the tool used for making the incisions widens significantly the cracks which have a width greater than that of the natural cracks and therefore the use of resin alone might not be sufficient to achieve perfect joining together of the two portions forming the artificial crack created, also in view of the shrinkage of the resin during hardening.

According to one possible embodiment of the method according to the present invention, before filling the incisions with an adhesive or a adhesive mixture, the crack may be partially filled with stone material granulate of given grain size and colour.

In an alternative embodiment, partial filling with resin is performed, followed by partial filling again with an inert granulate and subsequent filling with resin.

Basically, as referred to above, it is preferably to use inert granular material in order to reduce the quantity of resin needed and improve the bonding together of the two portions of the incision.

The incision filling operation may be performed both automatically and manually.

In the case where the filling operation is automated, a robot device may be provided, said device being controlled by a software which, once the crack path has been acquired, is activated so as to fill the cracks.

The robot device may be a separate machine and therefore located downstream of the machine which makes the grooves or incisions or could also be the same machine in which the grooves are made.

The incision filling step is schematically shown in the box 38 of Fig. 6 in which an automated device 381 is used.

In the case of a single machine, it could for example consist of a machine equipped with a dry-operation cutting disc suitable for forming the grooves or incisions and further comprising dispensing devices suitable for performing filling with resin, resin and granulate, or first granulate and then resin.

In the case where the operation is performed manually, an operator handles a suitable dispensing device manually. A dispensing device for the filling granulate and a dispensing device for the resin (for example a carafe) could therefore be provided.

Alternatively, the worker could have two dispensing devices which are combined: a first dispenser for the filling material and a second dispenser for the resin.

This alternative for some plants could be feasible in particular in those plants where the time cycle allows it, or in countries where the cost of labour is low.

In accordance with a possible embodiment of the present method and in a manner known per se to the person skilled in the art, a step could be envisaged where, in addition to the operations described above, a surface reinforcement could be applied onto the side of the slab which, during use, is not visible.

The surface reinforcement could be, for example, a meshwork, a fibre-glass mat, a honeycomb structure or an inert material such as ceramic material or other product.

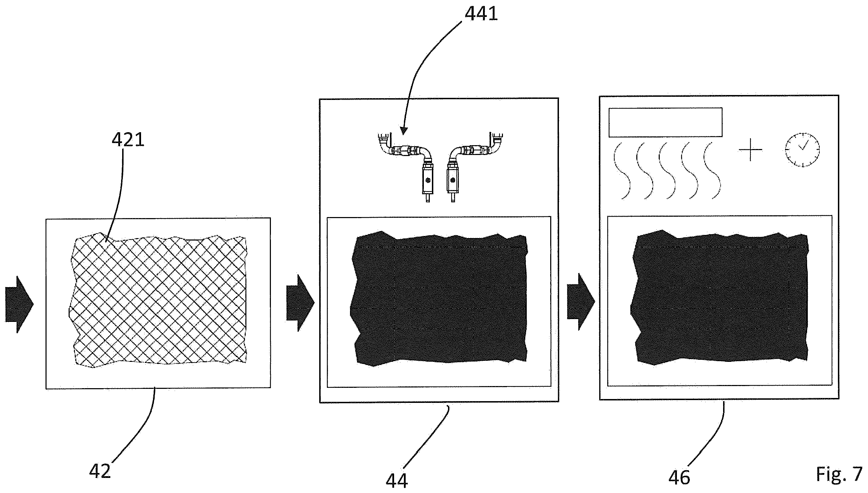

This step is schematically represented in the boxes 42, 44 in Figure 7. Figure 7 shows a slab 12 over which a reinforcing meshwork 421 has been spread. Then, as shown in the box 44, bonding resin dispensers 441 spread resin over the surface on which the reinforcing meshwork 421 has been arranged.

The last step in the method of the present invention involves hardening of the resin. Hardening of the resin is preferably performed in an environment heated to a temperature of about 40-60°C, such as an oven.

This step is applicable both to the case where a reinforcing element has been applied (box 46 in Figure 7) and to the case where no reinforcing element has been applied.

The initial hardening of an epoxy resin normally may require a time period of 60 to 120 minutes, so that usefully the oven may have several shelves for accommodating several slabs. The subsequent post-hardening process normally requires 1 or 2 days at room temperature. The operations described above may be all carried out in a single station or in successive stations, depending on the productivity required.

Preferably the slabs, thus treated and reconditioned, may then be turned over so that they can be polished on the visible side.

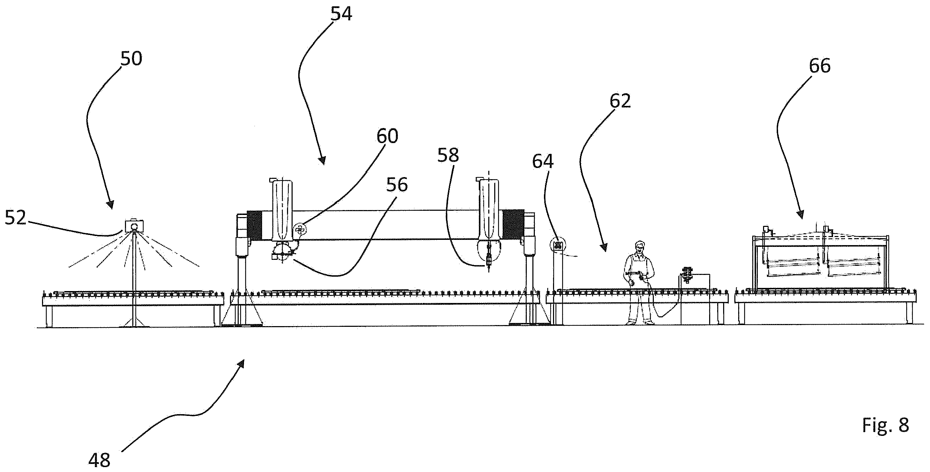

Figures 8 shows in schematic form an example of a plant 48 according to the present invention.

The plant comprises a first station 50 for identifying the cracks highlighted beforehand by means of a suitable marker. The first station 50 is provided for example with an optical recording machine 52.

The plant also comprises a second station or machine tool 54 in which the following operations are performed:
- milling of the cracks identified using a diamond-disc tool 56 or removal of the occlusions with a pressurized water jet via the nozzle 58;
- cleaning and heating/drying of the grooves, by means of a fan 60 associated with the machining head of the diamond disc;
- filling of the grooves by means of the nozzle 58 supplied with a resin and sand mixture (according to a possible embodiment the milling mandrel and the device for dispensing the filling material could be mounted on the same carriage);

The plant comprises finally:
- a third station 62 comprising a roll of reinforcing meshwork 64 and a station (which may be operator-assisted) for manual or automatic distribution of resin;
- a fourth station or catalysis oven 66 inside which hardening of the resin is performed. The advantages of the invention which allows the reconditioning of slabs which otherwise could not be reconditioned and would be discarded are therefore clear.

Moreover, optionally incisions may be made on the visible side of the slab and colouring fillers used, in colour synchrony with the colour of the slab, so as to obtain slabs which are aesthetically pleasing and appealing.

Moreover, the method is carried out in an industrial manner, making major use of automation, and therefore resulting in reduced management or labour costs.

The same method could also be used to obtain slabs with inlaid patterns, irrespective as to whether they have cracks, namely the method according to the invention could be used to obtain slabs with particular aesthetic effects, i.e. so-called inlaid slabs.

For example, fillers with suitable colouring depending on the type of slab and its tonality may be used, or further grooves may be deliberately created (in intact zones, therefore, of the slab) in addition to the grooves created by way of necessity, all of these grooves being then filled. In particular, it is possible to consider concealing the reconditioning work carried out on the slab and giving the slab the appearance of an inlaid slab by adding "ad hoc" other grooves in given positions and using suitably coloured fillers.

The person skilled in the art, in order to satisfy specific needs, may make modifications to the embodiments described above and/or replace the element described with equivalent elements, without thereby departing from the scope of the attached claims.

## Claims

1. Method for reconditioning or consolidating slabs (12) of stone material, comprising the steps of:
a) identifying cracks (14, 16, 18) or crack portions having a width, along the surface of the slab, not greater than about 1 mm, and/or cracks or crack portions containing occlusions, performed by taking a scan or photograph of the slab using optical detection systems;
b) making an incision in the cracks (14, 16, 18) or crack portions identified in step (a), so as to form incisions (20, 22, 24) which are not through-incisions;
c) filling the incisions (20, 22, 24) made, with a filling material comprising resin or adhesive material; and
d) allowing the resin or adhesive material to harden.

2. Method according to Claim 1, **characterized in that** the incision (20, 22, 24) has a depth equal to 60-80% of the thickness of the slab.

3. Method according to Claim 1, **characterized in that** the incisions have a width, along the surface of the slab, equal to at least about 3 mm.

4. Method according to Claim 1, **characterized in that** the identification step is carried out on the rear surface of the slab which, during use, is not visible.

5. Method according to Claim 1, **characterized in that**, before the step of taking a scan or photograph of the slab, the operator indicates or marks the cracks (14, 16, 18) or crack portions in which the incisions must be made.

6. Method according to Claim 1, **characterized in that**, during the incision step, a tool is moved so as to make an incision along the cracks (14, 16, 18) or crack portions identified by means of an anthropomorphic arm, a Cartesian robot or a machine with three, four or six axes.

7. Method according to Claim 1, **characterized in that** the incision is made with a machining head comprising a diamond disc, a water cutting nozzle, a diamond chain tool, a shaped milling cutter or an end milling cutter.

8. Method according to Claim 1, **characterized in that** the incision is made by means of a machining tool which follows an incision path which is programmed by an operator by means of a programmable control unit.

9. Method according to Claim 1, **characterized in that** it comprises a step of cleaning the slab in which the incisions have been made, in order to eliminate any machining residue left inside the incisions.

10. Method according to Claim 1, **characterized in that** it comprises a step where the slab is dried if the incision step is carried out using a supply of coolant or by means of cutting with a pressurized-water jet.

11. Method according to Claim 1, **characterized in that** it comprises a step where the slab is preheated before performing filling in order to improve the setting of some types of resin used.

12. Method according to Claim 1, **characterized in that** the bonding resin is deposited inside the incisions made, said incisions having been suitably cleaned and dried where necessary.

13. Method according to Claim 1, **characterized in that** firstly an inert granulate of predetermined grain size and then the bonding resin is deposited inside the incisions made, after any suitable cleaning and drying of the incisions.

14. Method according to Claim 1, **characterized in that** a mixture of bonding resin and inert granulate of predetermined grain size is deposited inside the incisions made, after any suitable cleaning and drying of the incisions.

15. Method according to Claim 1, **characterized in that** it comprises a step in which a surface reinforcement is added onto the side of the slab which during use is not visible.

16. Method according to Claim 1, **characterized in that** the resin or adhesive material hardening step is performed preferably inside an environment heated to a temperature of about 40-60°C.

17. Method according to Claim 1, **characterized in that** the resin is chosen from the group comprising: epoxy, polyester or silicone resin.

18. Method according to Claim 1, **characterized in that** the incision filling step is performed by a robot device.
